# EUROPÄISCHE PATENTSCHRIFT

(11) **EP 2 791 994 B1**
(45) Veröffentlichungstag und Bekanntmachung des Hinweises auf die Patenterteilung: **01.05.2019**
(21) Anmeldenummer: 12794219.1
(22) Anmeldetag: 15.11.2012
(51) Int. Cl.: H01M 2/10, H01M 2/20, H01M 10/0525, H01M 2/30

(54) **BATTERIEMODUL MIT EINEM EIN ELEKTRISCH LEITENDES FLUID ENTHALTENDEN ZELLVERBINDER**
BATTERY MODULE WITH A CELL CONNECTOR CONTAINING AN ELECTRICALLY CONDUCTIVE FLUID
MODULE DE BATTERIE MUNI D'UN CONNECTEUR D'ÉLÉMENTS CONTENANT UN FLUIDE ÉLECTROCONDUCTEUR

(30) Priorität: 14.12.2011 DE 102011088576
(43) Veröffentlichungstag der Anmeldung: 22.10.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: PFLUEGER, Claus Gerald, 71706 Markröningen (DE); DUERNEGGER, Wolfgang, 73614 Schorndorf (DE); LEUTHOLD, Christina, 80803 München (DE)
(74) Vertreter: Bee, Joachim
(86) Internationale Anmeldenummer: PCT/EP2012/072762
(87) Internationale Veröffentlichungsnummer: WO 2013/087350

(56) Entgegenhaltungen:
- JP-A- 2010 027 241
- JP-A- 2010 238 516
- US-A1- 2009 159 347

## Beschreibung

Die vorliegende Erfindung betrifft ein Batteriemodul mit einer Vielzahl von Batteriezellen, die über Zellverbinder zusammengeschaltet sind. Ferner betrifft die Erfindung ein Kraftfahrzeug, das ein solches Batteriemodul enthält.

### Stand der Technik

Es zeichnet sich ab, dass in Zukunft sowohl bei stationären Anwendungen, wie Windkraftanlagen, in Kraftfahrzeugen, die als Hybrid- oder Elektrokraftfahrzeuge ausgelegt sind, als auch bei Elektronikgeräten, wie Laptops oder Mobiltelefonen, neue Batteriesysteme zum Einsatz kommen werden, an die sehr hohe Anforderungen bezüglich Zuverlässigkeit, Sicherheit, Leistungsfähigkeit und Lebensdauer gestellt werden.

In Fahrzeugen mit zumindest teilweisem elektrischen Antrieb kommen elektrische Energiespeicher zum Einsatz, um die elektrische Energie für den Elektromotor, welcher den Antrieb unterstützt bzw. als Antrieb dient, zu speichern. In den Fahrzeugen der neuesten Generation finden hierbei sogenannte Lithium-Ionen-Batterien Verwendung. Diese zeichnen sich unter anderem durch hohe Energiedichten und eine äußerst geringe Selbstentladung aus. Lithium-Ionen-Zellen besitzen mindestens eine positive und eine negative Elektrode (Kathode bzw. Anode), die Lithium-Ionen (Li+) reversibel ein-(Interkalation) oder wieder auslagern (Deinterkalation) können.

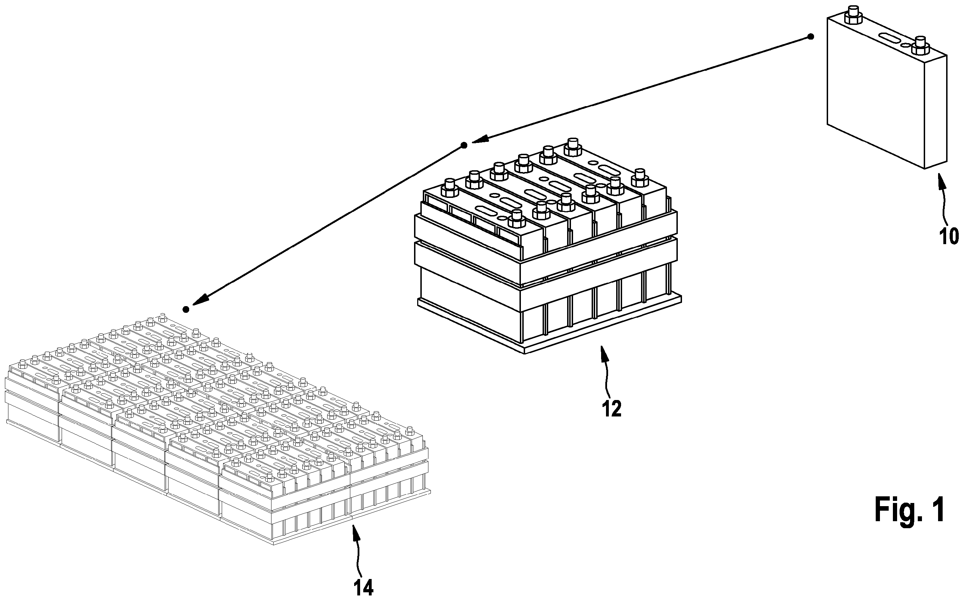

Figur 1 zeigt, wie einzelne Batteriezellen 10 zu Batteriemodulen 12 und dann zu einer Batterie 14 zusammengefasst werden können. Dies erfolgt durch eine nicht dargestellte Parallel- oder Reihenschaltung der Pole der Batteriezellen 10. Dabei besteht per Definition ein Batteriemodul 12 bzw. eine Batterie 14 aus mindestens zwei Batteriezellen 10.

Die einzelnen Batteriezellen werden mithilfe sogenannter Zellverbinder miteinander verschaltet. Die Zellverbinder erstrecken sich demnach zwischen den einzelnen Polen, wobei je nach Auslegung auch ein Zellverbinder mit einem Pol von mehreren Batteriezellen kontaktieren kann. Im Stand der Technik sind dazu unterschiedlichste Bautypen von Zellverbindern entwickelt worden. Für die Zwecke der vorliegenden Erfindung können diese Konstruktionen eingeteilt werden in Zellverbinder, die auf einer regiden metallischen Platte basieren und Zellverbinder, deren Grundstruktur aus einem elektrisch leitfähigen Draht besteht. Die bekannten Zellverbinder zeigen jedoch nur eine eingeschränkte geometrische Flexibilität und die Anschlussstellen zwischen Batteriepol und Zellverbinder sind zumeist nur unzureichend elektrisch isoliert. Daher müssen zusätzliche Maßnahmen ergriffen werden, um Sicherheitsanforderungen in der Montage (z. B. Berührungsschutz) und im Betrieb (z. B. Schutz vor Korrosion) zu erfüllen.

### Offenbarung der Erfindung

Die Erfindung geht aus von einem Batteriemodul mit einer Vielzahl von Batteriezellen, die über Zellverbinder zusammengeschaltet sind. Das Modul zeichnet sich dadurch aus, dass der Zellverbinder ein Hohlkörper aus einem elektrisch nicht leitenden Material ist, der ein elektrisch leitendes Fluid enthält.

Der Erfindung liegt die Erkenntnis zugrunde, dass durch einen Zellverbinder, dessen Grundkörper aus einem elektrisch nicht leitfähigen Material besteht und der die gesamte Anschlussstelle der Batterie übergreift, ein besonders sicherer Berührungsschutz geschaffen werden kann. Der Grundkörper des Zellverbinders ist dabei als Hohlkörper ausgeführt und im Inneren dieses Hohlkörpers befindet sich ein Fluid, das elektrisch leitfähig ist. Das Fluid stellt den elektrischen Kontakt zwischen den Anschlusspolen der Batterie her. Der Hohlkörper des Zellverbinders fungiert damit als eine Art Leitungssystem für das elektrisch leitfähige Fluid.

Die Anschlussstelle zwischen Zellverbinder und Polanschluss ist als Kugelgelenkanschluss ausgeführt. In dieser Ausführung kann der Zellverbinder an seiner Oberseite insbesondere einen Anschluss zur Befüllung und/oder Entlüftung aufweisen. Der Kugelgelenkanschluss kann beispielsweise derart ausgestaltet werden, dass der Polanschluss der Batterie eine kugelförmige Kontur aufweist und der Hohlkörper des Zellverbinders eine komplementäre sphärische Öffnung besitzt, die den kugelförmigen Polanschluss aufnehmen kann. Ferner sind Dichtelemente vorhanden, die nach dem Einsetzen des Polanschlusses in die Öffnung des Zellverbinders den Innenraum des Hohlkörpers im Bereich des Kugelgelenkanschlusses abdichten.

Um einen Versatzausgleich zwischen den Batteriezellen zu gewährleisten, weist eine Verbindungsleitung zwischen den Anschlussstellen (z. B. über die Kugelgelenkanschlüsse) eine gewundene Kontur auf, insbesondere kann sie oder U-förmig (unabhängig von der Raumlage) zwischen den Anschlusspunkten verlaufen.

Das elektrisch leitende Fluid ist vorzugsweise ausgewählt aus der Gruppe umfassend (i) Pasten, Fette oder Gele, die eine Dotierung mit elektrisch leitfähigen Partikeln aufweisen, (ii) elektrisch leitfähigen elektrochemisch stabilen Flüssigkeiten und (iii) bei Raumtemperatur flüssigen Metallen oder Metalllegierungen (zum Beispiel auf Basis von Gallium-Indium-Zinn).

Der Hohlkörper des Zellverbinders besteht aus einem elektrisch nicht leitenden Material, das vorzugsweise ein Kunststoff ist. Der Kunststoff ist vorzugsweise ausgewählt aus der Gruppe umfassend Polypropylen, Polyester, Polyurethan, Polyethylenterephthalat, Polyimid, Polyetheretherketon, fluorierte Polymere (zum Beispiel Polytetrafluorethylen), Silikone und Elastomere (zum Beispiel Fluorkautschuk). Der Kunststoff kann verstärkt sein (zum Beispiel faserverstärkt, gefüllt, thermisch und mechanisch stabilisierte Kunststoffe).

Die Batteriezelle ist vorzugsweise als Sekundärzelle ausgelegt, insbesondere eine Lithium-Ionen-Batterie.

Ein weiterer Aspekt der Erfindung liegt in der Bereitstellung eines Kraftfahrzeuges, das das zuvor beschriebene Batteriemodul enthält.

Weitere bevorzugte Ausgestaltungen der Erfindung ergeben sich aus den Unteransprüchen oder den Erläuterungen der nachfolgenden Beschreibung.

### Zeichnungen

Die Erfindung wird nachfolgend anhand eines Ausführungsbeispiels und der dazugehörigen Zeichnung näher erläutert. Es zeigen:
Figur 1 eine schematische Darstellung des Aufbaus eines Batteriemoduls; und
Figur 2 eine schematische Darstellung eines erfindungsgemäßen Zellverbinders für ein Batteriemodul.

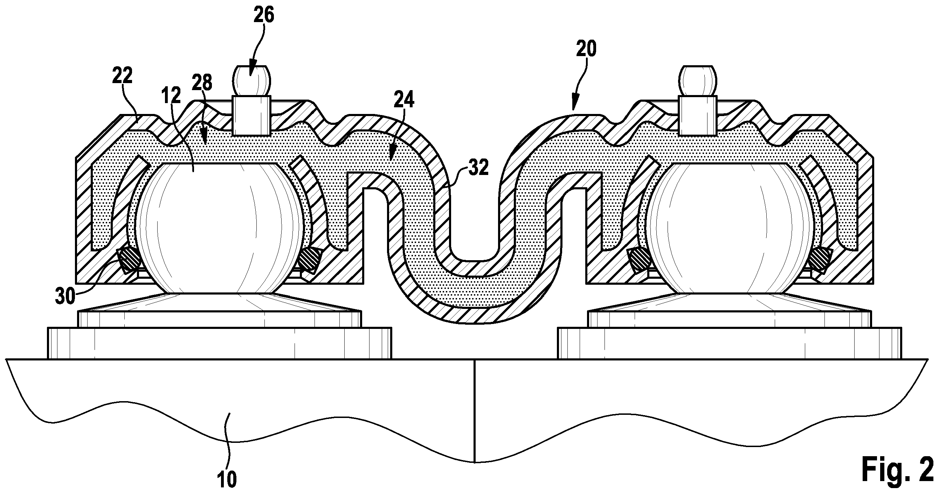

Der Figur 2 ist ein Ausschnitt aus einem erfindungsgemäßen Batteriemodul mit zwei Batteriezellen 10 zu entnehmen, die über einen Zellverbinder 20 elektrisch leitend verbunden sind. Die Batteriezelle 10 kann beispielsweise eine Lithium-Ionen-Batterie sein. An der Oberseite der Batteriezelle 10 befindet sich ein Polanschluss 12, hier ausgeführt mit einem kugelförmigen Kopf. Der Polanschluss 12 besteht aus einem Metall.

Der Zellverbinder 20 weist einen Hohlkörper 22 aus einem elektrisch nicht leitenden Material, beispielsweise einem Kunststoff, auf. Der innere Hohlraum des Hohlkörpers 22 ist mit einem elektrisch leitenden Fluid 24 befüllt. Eine Befüllung beziehungsweise Entlüftung des Hohlkörpers 22 kann über den Anschluss 26 erfolgen.

Eine Anschlussstelle zwischen Zellverbinder 20 und Polanschluss 12 der Batterie ist als Kugelgelenkanschluss ausgeführt. Dementsprechend bildet der Hohlkörper 22 des Zellverbinders 20 einen sphärischen Hohlraum 28 aus, der auf die kugelförmige Kontur des Polanschlusses 12 abgestimmt ist und diesen im zusammengesetzten Zustand aufnimmt. Eine Dichtung 30 liegt im zusammengesetzten Zustand am Polanschluss 12 an und schließt damit den Hohlraum 28 nach unten ab.

Der Hohlkörper 22 des Zellverbinders 20 weist ferner eine Verbindungsleitung 32 zwischen den beiden Anschlussstellen für die Batteriezellen 10 auf. Die Verbindungsleitung 32 hat vorliegend einen U-förmigen Verlauf, so dass ein Versatzausgleich zwischen den Batteriezellen 10 gewährleistet ist.

Über das Fluid 24 sind demnach die beiden Batteriezellen 10 elektrisch gekoppelt. Dem Fluid 24 kann ein Korrosionsinhibitor zugesetzt werden. Da der Hohlkörper 22 des Zellverbinders 20 den Polanschluss12 vollständig abdeckt und zudem das Fluid 24 isoliert, ist ein hinreichender Kontaktschutz gegeben.

## Patentansprüche

1. Batteriemodul mit einer Vielzahl von Batteriezellen (10), die über Zellverbinder (20) zusammengeschaltet sind, **dadurch gekennzeichnet, dass** der Zellverbinder (20) ein Hohlkörper (22) aus einem elektrisch nicht leitenden Material ist, der ein elektrisch leitendes Fluid (24) enthält, dass eine Anschlussstelle zwischen Zellverbinder und Polanschluss (12) der Batterie als Kugelgelenkanschluss ausgeführt ist, und dass eine Verbindungsleitung (32) des Zellverbinders (20) zwischen den Anschlussstellen eine gewundene Kontur aufweist.

2. Batteriemodul nach Anspruch 1, bei dem der Zellverbinder (20) an seiner Oberseite einen Anschluss (26) zur Befüllung und/oder Entlüftung aufweist.

3. Batteriemodul nach Anspruch 1, bei dem die Verbindungsleitung (32) S- oder U-förmig ist.

4. Batteriemodul nach einem der vorhergehenden Ansprüche, bei dem das elektrisch leitende Fluid (24) ausgewählt ist aus der Gruppe umfassend (i) Pasten, Fette oder Gele, die eine Dotierung mit elektrisch leitfähigen Partikeln aufweisen, (ii) elektrisch leitfähigen elektrochemisch stabilen Flüssigkeiten und (iii) bei Raumtemperatur flüssigen Metallen oder Metalllegierungen.

5. Batteriemodul nach einem der vorhergehenden Ansprüche, bei dem das elektrisch nicht leitende Material des Hohlkörpers (22) ein Kunststoff ist.

6. Batteriemodul nach Anspruch 5, bei dem der Kunststoff ausgewählt ist aus der Gruppe umfassend Polypropylen, Polyester, Polyurethan, Polyethylenterephthalat, Polyimid, Polyetheretherketon, fluorierte Polymere, Silikone und Elastomere.

7. Batteriemodul nach einem der vorhergehenden Ansprüche, bei dem die Batterie eine Lithium-Ionen-Batterie ist.

8. Kraftfahrzeug mit einem Batteriemodul nach einem der Ansprüche 1 bis 7.

## Claims

1. Battery module having a multitude of battery cells (10) connected via cell connectors (20), **characterized in that** the cell connector (20) is a hollow body (22) made from an electrically nonconductive material containing an electrically conductive fluid (24), **in that** a connection site between cell connector and pole connection (12) of the battery is designed as a ball-and-socket joint, and **in that** a connecting wire (32) of the cell connector (20) between the connection sites has a winding contour.

2. Battery module according to Claim 1, in which the cell connector (20) has a connection (26) for filling and/or ventilation on its top side.

3. Battery module according to Claim 1, in which the connecting wire (32) is S- or U-shaped.

4. Battery module according to any of the preceding claims, in which the electrically conducting fluid (24) is selected from the group comprising (i) pastes, greases or gels doped with electrically conductive particles, (ii) electrically conductive, electrochemically stable liquids, and (iii) metals or metal alloys that are liquid at room temperature.

5. Battery module according to any of the preceding claims, in which the electrically nonconductive material of the hollow body (22) is a plastic.

6. Battery module according to Claim 5, in which the plastic is selected from the group comprising polypropylene, polyester, polyurethane, polyethylene terephthalate, polyimide, polyetheretherketone, fluorinated polymers, silicones and elastomers.

7. Battery module according to any of the preceding claims, in which the battery is a lithium ion battery.

8. Motor vehicle having a battery module according to any of Claims 1 to 7.

## Revendications

1. Module de batterie doté d'une multiplicité d'éléments de batterie (10) qui sont interconnectés par le biais de connecteurs d'éléments (20), **caractérisé en ce que** le connecteur d'éléments (20) est un corps creux (22) en matériau électriquement non conducteur qui contient un fluide (24) électriquement conducteur, **en ce qu'**un emplacement de connexion entre le connecteur d'éléments et la connexion polaire (12) de la batterie est réalisée en tant que connexion à articulation à rotule, et **en ce qu'**une conduite de raccordement (32) du connecteur d'éléments (20) entre les emplacements de connexion présente un contour sinueux.

2. Module de batterie selon la revendication 1, dans lequel, sur son côté supérieur, le connecteur d'éléments (20) présente une connexion (26) destinée au remplissage et/ou à la purge d'air.

3. Module de batterie selon la revendication 1, dans lequel la conduite de raccordement (32) est en forme de S ou de U.

4. Module de batterie selon l'une des revendications précédentes, dans lequel le fluide (24) électriquement conducteur est sélectionné dans le groupe comprenant (i) des pâtes, des graisses ou des gels qui présentent un dopage avec des particules électriquement conductrices, (ii) des liquides électriquement conducteurs stables au plan électrochimique et (iii) des métaux ou alliages métalliques liquides à la température ambiante.

5. Module de batterie selon l'une des revendications précédentes, dans lequel le matériau électriquement non conducteur du corps creux (22) est une matière plastique.

6. Module de batterie selon la revendication 5, dans lequel la matière plastique est sélectionnée dans le groupe comprenant du polypropylène, du polyester, du polyuréthane, du poly(téréphtalate d'éthylène), du polyimide, du polyétheréthercétone, des polymères fluorés, des silicones et des élastomères.

7. Module de batterie selon l'une des revendications précédentes, dans lequel la batterie est une batterie lithium-ion.

8. Véhicule automobile doté d'un module de batterie selon l'une des revendications 1 à 7.
